# FASCICULE DE BREVET EUROPEEN

(11) **EP 1 937 180 B1**
(45) Date de publication et mention de la délivrance du brevet: **05.08.2009**
(21) Numéro de dépôt: 06775211.3
(22) Date de dépôt: 26.09.2006
(51) Int. Cl.: A61C 5/02, A61C 3/00, G01N 3/32, G01B 5/30

(54) **PROCEDE ET DISPOSITIF D IDENTIFICATION ET DE CONTROLE D UN INSTRUMENT MEDICAL**
VERFAHREN UND VORRICHTUNG ZUR IDENTIFIZIERUNG UND ÜBERWACHUNG EINES MEDIZINISCHEN INSTRUMENTS
METHOD AND DEVICE FOR IDENTIFYING AND MONITORING A MEDICAL INSTRUMENT

(30) Priorité: 29.09.2005 FR 0509973
(43) Date de publication de la demande: 02.07.2008
(73) Titulaire: FKG Dentaire S.A., 2300 La Chaux-de-Fonds (CH)
(72) Inventeur: ROUILLER, Jean-Claude, CH-2300 La Chaux-de-Fonds (CH); BREGUET, Olivier, CH-2400 Le Locle (CH); SUTER, Jacques, CH-2400 Le locle (CH)
(74) Mandataire: Nithardt, Roland
(86) Numéro de dépôt international: PCT/CH2006/000521
(87) Numéro de publication internationale: WO 2007/036063

(56) Documents cités:
- EP-A- 1 400 217
- WO-A-01/10329
- US-A- 4 733 361
- US-A- 4 882 867

## Description

### Domaine technique

La présente invention concerne un procédé de contrôle et d'identification d'un instrument médical, par exemple chirurgical ou odontologique, comportant au moins une poignée ou un manche de préhension et un organe d'intervention sur un patient, cet organe d'intervention étant monté de façon amovible sur ladite poignée ou ledit manche pour effectuer une coupe de tissus, un fraisage, un perçage, une cautérisation ou similaire.

Elle concerne également un instrument médical, par exemple chirurgical ou odontologique, comportant au moins une poignée ou un manche de préhension et un organe d'intervention sur un patient, cet organe d'intervention étant monté de façon amovible sur ladite poignée ou ledit manche pour effectuer une coupe de tissus, un fraisage, un perçage, une cautérisation ou similaire, équipé de moyens de contrôle et d'identification pour la mise en oeuvre de ce procédé.

### Technique antérieure

La publication internationale WO 01/10329 A1 décrit un dispositif de contrôle de la fatigue cyclique d'un instrument odontologique qui, dans une forme de réalisation particulière, comporte un code d'identification permettant d'identifier de façon univoque cet instrument. En outre, cet instrument est associé à une mémoire qui contient une information personnalisée sous la forme d'une valeur représentative de cette fatigue cyclique de l'instrument. Cette valeur est réactualisée manuellement par l'utilisateur après chaque usage de l'instrument et introduite dans la mémoire. Cette modification est effectuée au moyen d'un dispositif de traitement de l'information. La mémoire et le dispositif de traitement de l'information sont externes par rapport à l'instrument.

Les exigences en matière de traçabilité sont de plus en plus importantes et le contrôle des instruments, et notamment de leur fatigue cyclique, correspond à un besoin croissant en vue de répondre aux exigences en matière de sécurité. Les systèmes connus ne permettent pas de répondre à ces exigences d'une manière simple, facile à mettre en oeuvre par les praticiens et fiables. En outre, l'encombrement des systèmes existants est trop important et empêche une intégration des composants de ces systèmes dans les instruments. Enfin les capacités nécessaires pour la mémorisation des données essentielles correspondant à chaque instrument sont trop importantes pour permettre leur stockage sur des mémoires ayant des dimensions suffisamment réduites pour être logées sur la plupart des instruments eux-mêmes.

### Exposé de l'invention

La présente invention se propose de pallier les inconvénients des systèmes connus et de fournir un dispositif d'identification et de contrôle d'un instrument médical, par exemple chirurgical ou odontologique, suffisamment petit pour pouvoir être intégré à l'instrument lui-même, avec une capacité de mémorisation suffisante pour emmagasiner toutes les données constantes et toutes les données variables liées à l'utilisation de l'instrument et comportant des moyens permettant d'inscrire et de lire ces données constantes et variables à la demande d'un utilisateur.

Ce but est atteint par le procédé selon l'invention tel que défini en préambule et caractérisé en ce que l'on enregistre dans une unité de mémoire intégrée des données constantes et/ou des données variables évolutives en fonction de l'utilisation qui est faite dudit instrument avec des moyens pour inscrire et/ou modifier lesdites données variables évolutives, en ce que l'on lit lesdites données constantes et lesdites données variables évolutives avec des moyens de lecture, et en ce que l'on capte et émet lesdites données constantes et lesdites données variables évolutives contenues dans ladite unité de mémoire par l'intermédiaire de moyens de transmission.

De façon avantageuse, lesdites données constantes et/ou variables sont enregistrées automatiquement dans l'unité de mémoire intégrée et sont transmises automatiquement à un logiciel de gestion d'un moteur d'entraînement dudit instrument médical.

Lesdites données constantes et/ou variables peuvent être enregistrées manuellement dans l'unité de mémoire intégrée et transmises automatiquement à un logiciel de gestion d'un moteur d'entraînement dudit instrument médical.

De préférence, lesdites données constantes et/ou variables sont transmises par radiofréquence au logiciel de gestion d'un moteur d'entraînement dudit instrument médical.

De façon avantageuse, lesdites données constantes et/ou variables sont enregistrées au moyen d'un module interface d'enregistrement et de lecture.

Ce but est également atteint par un instrument médical, par exemple chirurgical ou odontologiques tel que défini en préambule et caractérisé en ce que ledit dispositif comporte un élément électronique intégré dans ledit instrument et pourvu d'au moins une unité de mémoire agencée pour contenir des données constantes et/ou des données variables évolutives en fonction de l'utilisation qui est faite dudit instrument, et en ce qu'il comporte des moyens pour lire et/ou modifier lesdites données constantes et/ou variables évolutives, des moyens pour inscrire ces données constantes et ces données variables évolutives, et des moyens de transmission agencés pour capter et émettre les données constantes et les données variables évolutives contenues dans ladite unité de mémoire.

De façon avantageuse, l'élément électronique implanté dans l'instrument est une étiquette électronique formée par un circuit intégré comportant l'unité de mémoire et les moyens pour lire et inscrire et/ou modifier les données contenues dans l'unité de mémoire de l'instrument sont formés par un module interface.

De préférence, les moyens de transmission agencés pour capter et émettre les données sont formés par une antenne disposée dans ledit module interface et par une antenne disposée dans ledit élément électronique intégré dans l'instrument.

Dans une première variante de réalisation, ledit module interface est implanté dans un contre-angle lié à l'instrument.

Dans une deuxième variante, ledit module interface est implanté dans un appareil de lecture et/ou d'enregistrement relié à un moteur d'entraînement de l'instrument.

De façon avantageuse, ledit élément électronique communique avec un logiciel d'un moteur d'entraînement de l'instrument médical au moyen d'un système de transmission par radiofréquence

Selon les variantes de réalisation, l'unité de mémoire de l'élément électronique peut être une unité de mémoire reprogrammable ou une unité de mémoire morte.

### Description sommaire des dessins

La présente invention et ses avantages apparaîtront mieux dans la description suivante de modes de réalisations préférées de l'invention donnés à titre indicatif et non limitatif et en référence aux dessins annexés, dans lesquels:
la figure 1A est une vue en élévation d'une première forme de réalisation d'un instrument odontologique équipé d'un dispositif de contrôle et d'identification selon l'invention,
la figure 1 B est une vue agrandie d'une partie de l'instrument de la figure 1A,
la figure 2A est une vue en élévation d'une seconde forme de réalisation d'un instrument odontologique équipé d'un dispositif de contrôle et d'identification selon l'invention,
les figures 2B et 2C représentent respectivement une vue agrandie en élévation et une vue de dessus d'une partie de l'instrument de la figure 2A,
la figure 3 est une vue perspective d'une première forme de réalisation d'un équipement complet de traitement odontologique, et
la figure 4 est une vue perspective d'une seconde forme de réalisation d'un équipement complet de traitement odontologique.

### Manière(s) de réaliser l'invention

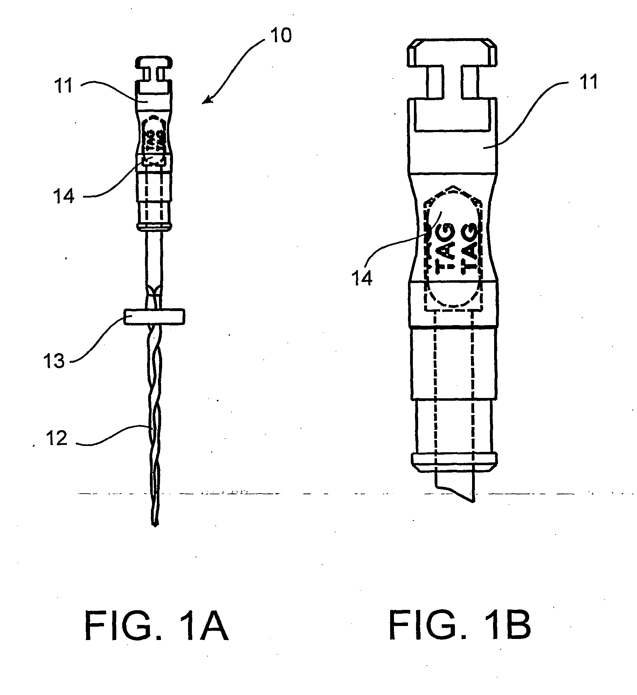

En référence aux figures 1A et 1B, l'instrument odontologique 10 représenté comporte une poignée ou un manche 11 et un organe d'intervention 12 qui constitue l'élément actif et se présente par exemple sous la forme d'une vrille coupante ou d'une lame coupante. La longueur de la zone coupante que le praticien désire utiliser selon le cas est délimitée par une rondelle d'arrêt 13 qui est mobile le long de la partie travaillante de l'organe d'intervention 12. Le cas échéant, elle peut être supprimée si le praticien l'estime nécessaire lors de certaines interventions. La vrille coupante a de préférence une conicité comprise entre 2 et 10% et sa géométrie est définie en fonction du type d'intervention, par exemple pour des extractions de la pulpe dentaire et des mises en forme du canal radiculaire.

Comme le montre plus précisément la figure 1 B, le manche 11 est équipé d'un dispositif selon l'invention sous la forme d'un élément électronique 14 intégré dans le corps dudit manche. Cet élément électronique, couramment appelé TAG est une étiquette électronique composée d'un circuit intégré comportant une unité de mémoire qui peut être soit une unité de mémoire morte, soit une unité de mémoire reprogrammable. Cette unité de mémoire est agencée pour contenir des données constantes et/ou des données variables évolutives en fonction de l'utilisation qui est faite de l'instrument 10, des moyens pour inscrire et/ou modifier lesdites données variables évolutives, des moyens pour lire lesdites données constantes et lesdites données variables évolutives, et un élément de transmission sous la forme d'une antenne permettant de capter et d'émettre les données constantes et les données variables évolutives contenues dans ladite unité de mémoire. Cette étiquette électronique TAG communique avec le logiciel d'un moteur d'entraînement de l'instrument par l'intermédiaire d'un module interface de lecture/écriture pourvu de moyens de transmission sous la forme d'une antenne. Ces éléments communiquent entre eux par radiofréquence. Les données figurant dans le TAG permettent au logiciel du moteur d'entraînement de piloter ce moteur en fonction du capital fatigue cyclique de l'instrument odontologique et, le cas échéant, d'arrêter le moteur et d'émettre un signal sonore ou visuel si ce capital fatigue cyclique est dépassé et si l'utilisation de cet instrument présente un risque pour le patient.

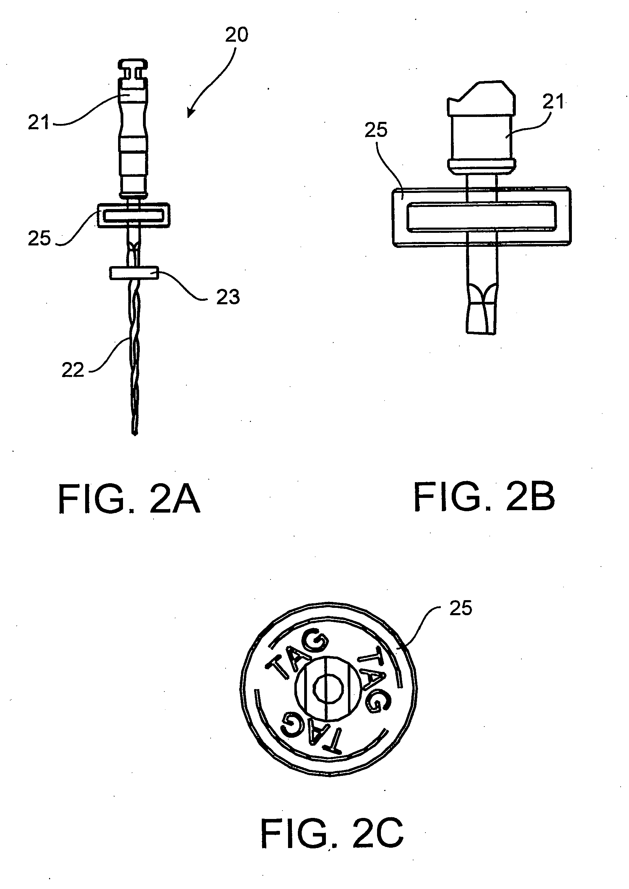

Les figures 2A à 2C illustrent une autre forme de réalisation d'un instrument odontologique équipé d'un dispositif de contrôle et d'identification selon l'invention. Cet instrument 20 comporte un manche 21, un organe d'intervention 22 qui constitue l'élément actif et qui se présente, comme pour la l'organe d'intervention 12, par exemple sous la forme d'une vrille coupante ou d'une lame coupante. La longueur de la zone coupante que le praticien désire utiliser selon le cas est délimitée par une rondelle d'arrêt 23 qui est mobile le long de la partie travaillante de l'organe d'intervention 22. Cet instrument est par ailleurs équipé d'un dispositif de contrôle de la fatigue cyclique 25 de l'organe d'intervention 22 tel que décrit par la publication internationale WO 01/10329 A1. Dans cette réalisation, l'élément électronique 24, au lieu d'être intégré au corps du manche 11 comme l'élément électronique 14, est intégré de préférence au dispositif de contrôle de la fatigue cyclique 25 (figures 2 B et 2C) de l'organe d'intervention ou à la rondelle d'arrêt 23.

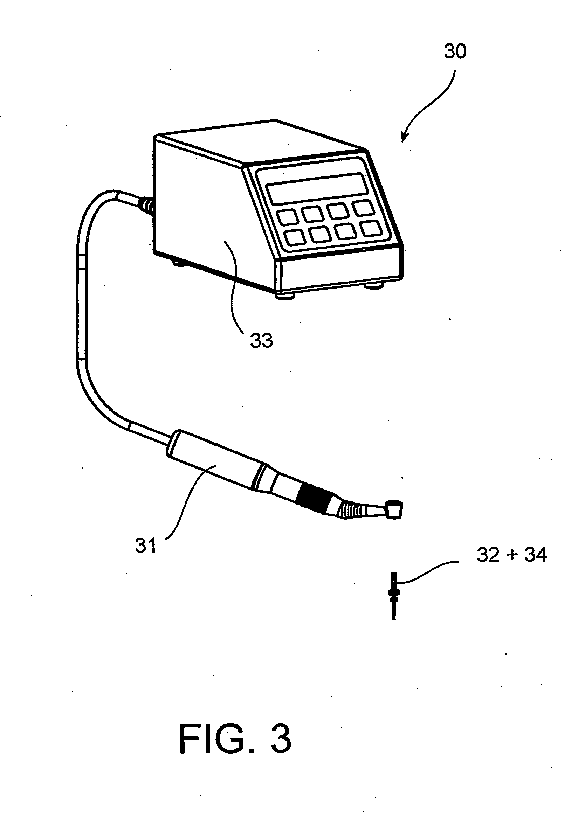

La figure 3 représente une première forme de réalisation d'un équipement complet de traitement odontologique 30 qui comprend un contre-angle 31, un instrument odontologique 32, équipé d'un élément électronique 34, à introduire dans ce contre-angle et un moteur d'entraînement 33 du contre-angle 31. Selon un mode préférentiel, le contre-angle 31 est équipé du module interface agencé pour transmettre directement au logiciel du moteur d'entraînement 33 les données techniques du code d'identification de l'instrument odontologique 32.

D'une manière plus complète, l'élément électronique 34 peut être agencé pour enregistrer des données variables qui évoluent à chaque utilisation de l'instrument. Dans une première forme de réalisation, ces données variables peuvent être enregistrées automatiquement par l'élément électronique et transmises au logiciel du moteur d'entraînement 34 par l'intermédiaire du module lecture/écriture du contre-angle 31. Dans une deuxième forme de réalisation, ces données variables peuvent être enregistrées automatiquement par l'instrument odontologique 32 et transmises par différentes voies au logiciel du moteur d'entraînement 33.

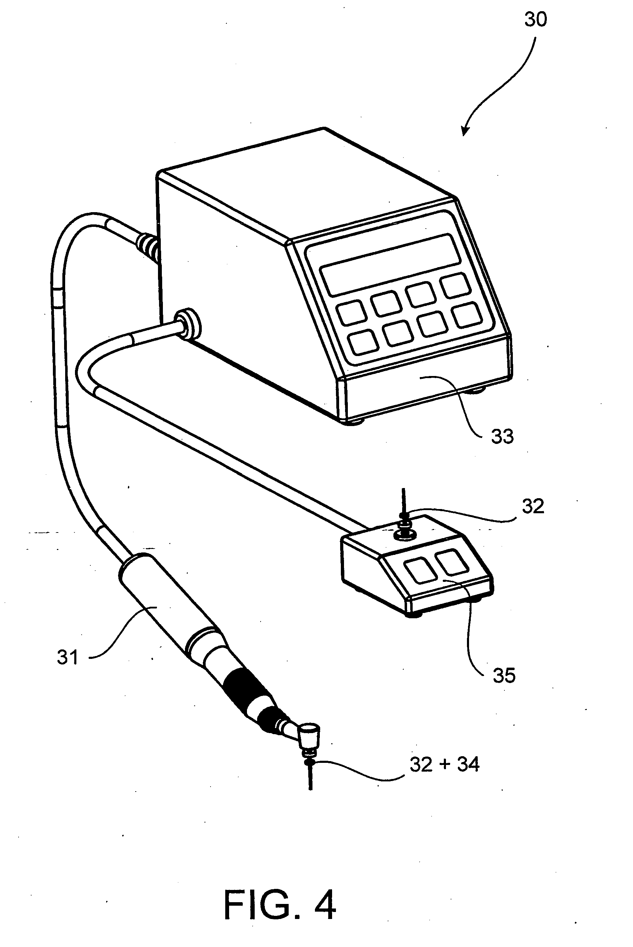

La figure 4 représente une seconde forme de réalisation d'un équipement complet de traitement odontologique 40 qui comprend un contre-angle 31, un instrument odontologique 32 introduit dans le contre-angle 31 et équipé d'un dispositif selon l'invention comprenant un élément électronique 34, un moteur d'entraînement 33 du contre-angle 31 et un appareil d'enregistrement et de lecture 35 externe et agencé pour recevoir l'instrument odontologique 32 après utilisation et qui permet au praticien d'enregistrer manuellement les données variables et de lire à la fois les données constantes et les données variables. Dans cette forme de réalisation le module interface lecture/écriture est logé dans l'appareil externe 35.

Dans une première version, l'élément électronique 14, 24 ne contient qu'un code d'identification de l'instrument 10, 20 qui englobe des données techniques relatives à cet instrument. De ce fait, le moteur d'entraînement de l'instrument est agencé pour adapter ses paramètres en fonction des données contenues dans le code d'identification. Ces paramètres sont par exemple la vitesse de rotation, le couple de travail et un paramètre appelé "crédit fatigue cyclique" qui correspond au potentiel résiduel de fiabilité de l'instrument après chaque utilisation, ce crédit fatigue cyclique étant décroissant pendant la durée de vie de l'instrument. Les données mémorisées dans l'élément électronique 14, 24 sont des données constantes qui, après transmission au moteur d'entraînement, sont interprétées par un logiciel de gestion de ce moteur d'entraînement. L'élément électronique 14, 24 fonctionne en mode lecture uniquement. Les données mémorisées peuvent être communiquées par toutes les voies usuelles, par exemple par radiofréquence via une antenne, soit par connexion directe de l'instrument 10, 20 avec un dispositif de lecture couplé au moteur d'entraînement.

Dans une deuxième version, l'élément électronique 14, 24 contient, d'une part, un code d'identification de l'instrument 10, 20 qui englobe des données techniques relatives à cet instrument et qui correspondent aux données constantes évoquées ci-dessus et, d'autre part, des données variables qui sont évolutives en fonction du degré d'usure de l'instrument, c'est-à-dire son crédit fatigue cyclique. Ce paramètre crédit fatigue cyclique peut être exprimé en nombre de tours restant à faire par l'instrument avant d'être mis au rebut ou en temps résiduel d'utilisation fiable. Dans la pratique, le contre-angle 31 peut être directement équipé du module de lecture qui communique les données au logiciel du moteur d'entraînement. Après chaque utilisation, les nouvelles données peuvent être transmises de façon automatique sans aucune intervention du praticien. Selon une variante, le contre-angle peut être équipé d'une commande manuelle que le praticien actionne et qui a pour fonction de provoquer la transmission et l'enregistrement des nouvelles données au logiciel du moteur d'entraînement. Selon une autre variante, les données peuvent être transmises manuellement par le praticien dans l'appareil de lecture spécifique annexe 35 qui a pour fonction de transmettre et d'enregistrer les nouvelles données au logiciel du moteur d'entraînement.

D'autres formes de réalisation peuvent être envisagées sans sortir du cadre de la présente invention. Notamment des moyens de signalisation peuvent être prévus pour émettre un signal sonore ou visuel lorsque le crédit fatigue est dépassé, sachant que le risque d'une rupture accidentelle de l'outil de coupe peut entraîner des dommages importants chez le patient en cours de traitement.

## Revendications

1. Procédé de contrôle et d'identification d'un instrument médical, par exemple chirurgical ou odontologique, comportant au moins une poignée ou un manche de préhension (11; 21) et un organe d'intervention sur un patient, cet organe d'intervention (12; 22) étant monté de façon amovible sur ladite poignée ou ledit manche pour effectuer une coupe de tissus, un fraisage, un perçage, une cautérisation ou similaire, **caractérisé en ce que** l'on enregistre dans une unité électronique de mémoire intégrée dans ledit instrument des données constantes et/ou des données variables évolutives en fonction de l'utilisation qui est faite dudit instrument avec des moyens pour inscrire et/ou modifier lesdites données variables évolutives, **en ce que** l'on lit lesdites données constantes et lesdites données variables évolutives avec des moyens de lecture, et **en ce que** l'on capte et émet lesdites données constantes et lesdites données variables évolutives contenues dans ladite unité de mémoire par l'intermédiaire de moyens de transmission.

2. Procédé selon la revendication 1, **caractérisé en ce que** lesdites données constantes et/ou variables sont enregistrées automatiquement dans l'unité de mémoire et sont transmises automatiquement à un logiciel de gestion d'un moteur d'entraînement dudit instrument médical.

3. Procédé selon la revendication 1, **caractérisé en ce que** lesdites données constantes et/ou variables sont enregistrées manuellement dans l'unité de mémoire et sont transmises automatiquement à un logiciel de gestion d'un moteur d'entraînement dudit instrument médical.

4. Procédé selon la revendication 2, **caractérisé en ce que** lesdites données constantes et/ou variables sont transmises par radiofréquence au logiciel de gestion d'un moteur d'entraînement dudit instrument médical.

5. Procédé selon la revendication 1, **caractérisé en ce que** lesdites données constantes et/ou variables sont enregistrées au moyen d'un module interface d'enregistrement et de lecture.

6. Dispositif de contrôle et d'identification d'un instrument médical (10; 20; 32), par exemple chirurgical ou odontologique, comportant au moins une poignée ou un manche de préhension (11; 21) et un organe d'intervention sur un patient, cet organe d'intervention (12; 22) étant monté de façon amovible sur ladite poignée ou ledit manche pour effectuer une coupe de tissus, un fraisage, un perçage, une cautérisation ou similaire, **caractérisé en ce que** ledit dispositif comporte un élément électronique (14; 24; 34) intégré dans ledit instrument et pourvu d'au moins une unité de mémoire agencée pour contenir des données constantes et/ou des données variables évolutives en fonction de l'utilisation qui est faite dudit instrument, et **en ce qu'**il comporte des moyens pour lire et/ou modifier lesdites données constantes et/ou variables évolutives, des moyens pour inscrire ces données constantes et ces données variables évolutives, et des moyens de transmission agencés pour capter et émettre les données constantes et les données variables évolutives contenues dans ladite unité de mémoire.

7. Dispositif selon la revendication 6, **caractérisé en ce que** l'élément électronique (14; 24; 34) implanté dans l'instrument est une étiquette électronique formée par un circuit intégré comportant l'unité de mémoire.

8. Dispositif selon la revendication 6, **caractérisé en ce que** les moyens pour lire et inscrire et/ou modifier les données contenues dans l'unité de mémoire de l'instrument sont formés par un module interface.

9. Dispositif selon les revendications 6 et 8, **caractérisé en ce que** les moyens de transmission agencés pour capter et émettre les données sont formés par une antenne disposée dans ledit module interface.

10. Dispositif selon les revendications 6 et 7, **caractérisé en ce que** les moyens de transmission agencés pour capter et émettre les données sont formés par une antenne disposée dans ledit élément électronique intégré dans l'instrument.

11. Dispositif selon la revendication 7, **caractérisé en ce que** ledit module interface est implanté dans un contre-angle lié à l'instrument.

12. Dispositif selon la revendication 7, **caractérisé en ce que** ledit module interface est implanté dans un appareil de lecture et/ou d'enregistrement (35) relié à un moteur d'entraînement de l'instrument (33).

13. Dispositif selon l'une quelconque des revendications 6 à 12, **caractérisé en ce que** ledit élément électronique communique avec un logiciel du moteur d'entraînement (33) de l'instrument médical (32) au moyen d'un système de transmission par radiofréquence.

14. Dispositif selon la revendication 6, **caractérisé en ce que** l'unité de mémoire de l'élément électronique est une unité de mémoire reprogrammable.

15. Dispositif selon la revendication 6, **caractérisé en ce que** l'unité de mémoire de l'élément électronique est une unité de mémoire morte.

## Claims

1. A method for monitoring and identifying a medical instrument, for example, a surgical or odontological instrument, comprising at least one grip or one handle (11; 21) and one member for intervention on a patient, this intervention member (12; 22) being fitted of a removable manner on said grip or handle to perform a cutting tissue, a drilling, a boring, a cauterizing, and the like, **characterized in that** constant data and/or variable data evolving according to the use of the instrument are recorded in an electronic storage unit incorporated within said instrument using means for writing and/or modifying said evolving variable data, **in that** said constant data and said evolving variable data are read with a data reading device, and **in that** said constant data and said evolving variable data stored in said memory unit are detected and transmitted through transmission means.

2. A method according to claim 1, **characterized in that** said constant and/or variable data are recorded automatically in the data storage unit and are transmitted automatically to an operating software of a motor driving sad medical instrument.

3. A method according to claim 1, **characterized in that** said constant and/or variable data are recorded manually in the data storage unit and are transmitted automatically to an operating software of a motor driving said medical instrument.

4. A method according to claim 2, **characterized in that** said constant and/or variable data are transmitted by radiofrequency to the operating software of the motor driving said medical instrument.

5. A method according to claim 1, **characterized in that** said constant and/or variable data are recorded by means of a read/write interface module.

6. A device for monitoring and identifying a medical instrument (10; 20; 32), for example, a surgical or odontological instrument, comprising at least one grip or handle (11; 21) and one member for intervention on a patient, this intervention member (12; 22) being fitted of a removable manner on said grip or handle to perform a cutting tissue, a drilling, a boring, a cauterizing, and the like, **characterized in that** said device comprises an electronic element (14; 24; 34) incorporated within said instrument and equipped with at least one data storage unit designed for storing the constant data and/or the variable data evolving according to the use of the instrument, and **in that** it comprises means for reading and/or modifying said constant and/(or evolving variable data, means for writing these constant data and these evolving variable data, and transmission means designed for detecting and transmitting the constant data and the evolving variable data contained in said storage unit.

7. A device according to claim 6, **characterized in that** the electronic element (14; 24; 34) implanted in the instrument is an electronic tag formed by an integrated circuit comprising the data storage unit.

8. A device according to claim 6, **characterized in that** the means for reading and writing and/or modifying the data contained in the storage unit of the instrument are formed of an interface module.

9. A device according to claims 6 and 8, **characterized in that** the transmission means designed for detecting and transmitting data is formed of an antenna located in said interface module.

10. A device according to claims 6 and 7, **characterized in that** the transmission means designed for detecting and transmitting data is formed of an antenna located in said electronic element incorporated within the instrument.

11. A device according to claim 7, **characterized in that** said interface module is implanted in a contra-angle connected to the instrument.

12. A device according to claim 7, **characterized in that** said interface module is implanted in a read/write apparatus (35) connected to a driving motor of the instrument (33).

13. A device according to anyone of claims 6 to 12, **characterized in that** said electronic element communicates with a software for the driving motor (33) of the medical instrument (32) by means of a radiofrequency transmission system.

14. A device according to claim 6, **characterized in that** the data storage unit of the electronic element is a reprogrammable memory unit.

15. A device according to claim 6, **characterized in that** the data storage unit of the electronic element is a read-only memory unit.

## Patentansprüche

1. Kontroll- und Identifikationsverfahren, zum Beispiel für ein chirurgisches oder odontologisches medizinisches Instrument, welches mindestens einen Griff oder Handgriff (11;21) und ein Element für einen Eingriff bei einem Patienten aufweist, wobei das Eingriffselement (12;22) beweglich auf dem Griff oder dem Handgriff angebracht ist, um einen Gewebeschnitt, einen Fräsvorgang, einen Bohrvorgang, eine Kauterisation oder Ähnliches durchzuführen,
**dadurch gekennzeichnet, dass** in einer in dem Instrument integrierten elektronischen Speichereinheit konstante Daten und/oder veränderliche, sich weiterentwickelnde Daten mit Einrichtungen zum Eintragen und/oder Abändern der sich weiterentwickelnden Daten in Abhängigkeit von der Nutzung des Instrumentes aufgezeichnet werden, wobei die konstanten Daten und die veränderlichen, sich weiterentwickelnden Daten mit Leseeinrichtungen gelesen werden, und wobei die in der Speichereinheit enthaltenen veränderlichen, sich weiterentwickelnden Daten mittels Übertragungseinrichtungen aufgenommen und ausgegeben werden.

2. Verfahren nach Anspruch 1,
**dadurch gekennzeichnet, dass** die konstanten und/oder veränderlichen Daten automatisch in der Speichereinheit aufgezeichnet und automatisch zu einer Verwaltungssoftware eines Antriebsmotors des medizinischen Instrumentes übertragen werden.

3. Verfahren nach Anspruch 1,
**dadurch gekennzeichnet, dass** die konstanten und/oder veränderlichen Daten manuell in der Speichereinheit aufgezeichnet und automatisch zu einer Verwaltungssoftware eines Antriebsmotors des medizinischen Instrumentes übertragen werden.

4. Verfahren nach Anspruch 2,
**dadurch gekennzeichnet, dass** die konstanten und/oder veränderlichen Daten per Radiofrequenz zu der Verwaltungssoftware eines Antriebsmotors des medizinischen Instrumentes übertragen werden.

5. Verfahren nach Anspruch 1,
**dadurch gekennzeichnet, dass** die konstanten und/oder veränderlichen Daten mittels eines Aufzeichnungsschnittstellen- und Lesemoduls aufgezeichnet werden.

6. Kontroll- und Identifikationsvorrichtung, zum Beispiel für ein chirurgisches oder odontologisches medizinisches Instrument (10;20;32), welches mindestens einen Griff oder Handgriff (11;21) und ein Element für einen Eingriff bei einem Patienten aufweist, wobei das Eingriffselement (12;22) beweglich auf dem Griff oder dem Handgriff angebracht ist, um einen Gewebeschnitt, einen Fräsvorgang, einen Bohrvorgang, eine Kauterisation oder Ähnliches durchzuführen,
**dadurch gekennzeichnet, dass** die Vorrichtung ein in dem Instrument integriertes elektronisches Element (14;24;34) aufweist, welches mit mindestens einer Speichereinheit versehen ist, die angeordnet ist, um konstante und/oder veränderliche, sich weiterentwickelnde Daten in Abhängigkeit von der Nutzung des Instrumentes zu enthalten, und wobei es Einrichtungen zum Lesen und/oder Abändern der konstanten und/oder der veränderlichen, sich weiterentwickelnden Daten, Einrichtungen zum Eintragen der konstanten Daten und der veränderlichen, sich weiterentwickelnden Daten und Übertragungseinrichtungen aufweist, um die konstanten Daten und die veränderlichen, sich weiterentwickelnden Daten, die in der Speichereinheit enthalten sind, aufzuzeichnen und auszugeben.

7. Vorrichtung nach Anspruch 6, **dadurch gekennzeichnet, dass** das in dem Instrument integrierte elektronische Element (14;24;34) ein elektronisches Etikett ist, welches aus einem integrierten Schaltkreis ausgebildet ist, der die Speichereinheit umfasst.

8. Vorrichtung nach Anspruch 6,
**dadurch gekennzeichnet, dass** die Einrichtungen zum Lesen und Eintragen und/oder Abändern der in der Speichereinheit des Instrumentes enthaltenen Daten aus einem Schnittstellenmodul ausgebildet sind.

9. Vorrichtung nach den Ansprüchen 6 und 8,
**dadurch gekennzeichnet, dass** die Übertragungseinrichtungen, die zur Aufzeichnung und Ausgabe der Daten angeordnet sind, aus einer in dem Schnittstellenmodul angeordneten Antenne ausgebildet sind.

10. Vorrichtung nach den Ansprüchen 6 und 7,
**dadurch gekennzeichnet, dass** die Übertragungseinrichtungen, die zur Aufzeichnung und Ausgabe der Daten angeordnet sind, aus einer in dem elektronischen Element angeordneten Antenne ausgebildet sind, welche in dem Instrument integriert ist.

11. Vorrichtung nach Anspruch 7,
**dadurch gekennzeichnet, dass** das Schnittstellenmodul in einem mit dem Instrument verbundenen Gegenwinkel eingebaut ist.

12. Vorrichtung nach Anspruch 7,
**dadurch gekennzeichnet, dass** das Schnittstellenmodul in einem mit einem Antriebsmotor des Instrumentes (33) verbundenen Lese- und/oder Aufzeichnungsgerät (35) eingebaut ist.

13. Vorrichtung nach einem der Ansprüche 6 bis 12,
**dadurch gekennzeichnet, dass** das elektronische Element mithilfe eines Radiofrequenz-Übertragungssystems mit einer Software des Antriebsmotors (33) des medizinischen Instrumentes (32) kommuniziert.

14. Vorrichtung nach Anspruch 6,
**dadurch gekennzeichnet, dass** die Speichereinheit des elektronischen Elementes eine umprogrammierbare Speichereinheit ist.

15. Vorrichtung nach Anspruch 6,
**dadurch gekennzeichnet, dass** die Speichereinheit des elektronischen Elementes eine Totspeichereinheit ist.
